# EUROPEAN PATENT APPLICATION

(11) **EP 1 380 874 A1**
(43) Date of publication of application: **14.01.2004**
(21) Application number: 02254890.3
(22) Date of filing: 11.07.2002
(51) Int. Cl.: G02F 1/03

(54) **Control loop apparatus and method therefor**

(71) Applicant: Agilent Technologies, Inc. - a Delaware corporation -, Palo Alto, CA 94303-0870 (US)
(72) Inventor: Meadowcroft, Simon, Stowmarket, Suffolk IP14 1TY (GB)
(74) Representative: Coker, David Graeme

(57) **Abstract**

In the field of optical communications, electro-absorption (EA) modulators (12) can be used to modulate electromagnetic radiation (50) to generate a modulated signal (52). A change in temperature of the EA modulator (12) during operation can change the extinction ratio and average power of the modulated signal (52). In order to maintain the extinction ratio and average power of the modulated signal (52) it is known to monitor the temperature of the EA modulator (12) and generate a feedback signal to cool or heat the EA modulator (12) as appropriate. Consequently, the present invention provides a control loop apparatus (10) for maintaining a constant extinction ratio and an average power of the modulated signal (52) without the need for the monitoring of the temperature of the EA modulator (12) and without the need to heat or cool the EA modulator (12).

## Description

The present invention relates to a control loop apparatus of the type used to compensate for a temperature change of an electro-absorption (EA) modulator for the purpose of maintaining a constant extinction ratio of modulated signals. The present invention also relates to a method of compensating temperature change of an EA modulator.

In the field of optical communications networks, modulators can be used to impose information onto electromagnetic radiation which may be transmitted to the modulator by a semiconductor laser device forming part of a transmitter unit. The information imposed onto the electromagnetic radiation by the modulator may be a stream of binary data, where the process of imposing such information onto the electromagnetic radiation is known as modulation, producing what is known as a modulated signal. The modulated signal output from the modulator is typically permitted to propagate to a receiver unit, for example, via an optical fibre. Upon receipt, the modulated signal is demodulated in order to recover the information imposed upon the electromagnetic radiation. The modulation of electromagnetic radiation is therefore fundamental to the communication of information throughout the optical communications network.

An electro-absorption (EA) modulator is an example of a modulator used in an optical communications network to produce modulated signals. The EA modulator is an optical device that makes use of an electro-absorption effect of a semiconductor acting as a modulating medium to modulate, at high speed, electromagnetic radiation propagating therethrough. In operation, an electric field is generated across the modulating medium of the EA modulator through which the propagating electromagnetic radiation will pass. The modulating medium of the EA modulator responds to the changes in the electric field by varying its absorption of electromagnetic radiation. Hence, applying a voltage signal across the modulating medium of the EA modulator correspondingly varies the absorption of electromagnetic radiation by the modulating medium, thereby modulating the information borne by the voltage signal onto the electromagnetic radiation propagating through the EA modulator in order to produce a modulated signal.

An important parameter of a modulated electromagnetic radiation is extinction ratio. The extinction ratio is the ratio between a first amplitude difference between a first power level used to represent a binary LOGIC 1 and a second power level used to represent a binary LOGIC 0, and a second amplitude difference between the second power level and an off (no light) condition of the EA modulator. Here, the second amplitude difference is known as a bias level of the EA modulator and is a quiescent voltage used to bring the EA modulator into an operating mode where an absorption edge of the modulating medium is close to the wavelength of the electromagnetic radiation to be modulated.

A modulated signal with a high extinction ratio will typically comprise a large difference in amplitude between the power used to represent the binary LOGIC 1 and the binary LOGIC 0 which, in turn, makes interpretation of the modulated signal (i.e. which bit represents a LOGIC 1 or a LOGIC 0) easier than if the first and second power levels were closer together. As the distance from its source of the propagation path of the modulated signal increases, the modulated signal will be subject to intrinsic power losses due to imperfect reflectivities of optical fibres carrying the modulated signal and also a dispersion penalty caused by chromatic dispersion of the modulated signal. If the modulated signal is subject to the above power losses then the first amplitude difference between the binary LOGIC 1 and the binary LOGIC 0 reduces as does the average power of the modulated signal. Consequently, detection and demodulation of the modulated signal becomes difficult and errors and/or loss of information can result. Therefore, in order to ensure maximum efficiency in the interpretation and demodulation of the modulated signal, the extinction ratio needs to be set to a level sufficient to reduce the impact of the above losses.

Should the EA modulator be subject to a change in temperature, the structure of the energy bands of the semiconductor acting as the modulating medium will change causing the absorption edge of the modulating medium of the EA modulator to shift away from the wavelength of the electromagnetic radiation to be modulated. In addition, the change in the structure of the energy bands of the semiconductor causes the first power level used to represent the binary LOGIC 1 and the required second power level used to represent the binary LOGIC 0 to vary. Consequently, the change in temperature of the EA modulator results in the modulated signal having a varied extinction ratio and average power.

In order to compensate for a change in temperature and thus maintain the extinction ratio and the average power of the modulated signal output by the EA modulator, it is known to monitor the temperature of the EA modulator using a temperature sensor and, in response to a change in temperature detected by the temperature sensor, generate a feedback signal to be received by, for example, a thermoelectric device such as a Peltier effect device, to cool or heat the EA modulator as appropriate.

An alternative to cooling or heating the EA modulator in response to a detected change in temperature of the EA modulator is to adjust the bias level of the EA modulator as the temperature varies. To this end, a predetermined functional relationship between the temperature of the EA modulator and the bias level can be modelled so that, should the temperature of the EA modulator vary, the bias level can be adjusted so as to maintain the extinction ratio at a desired level and maintain the average power.

According to a first aspect of the present invention, there is provided a bias signal generation apparatus for a modulator comprising a processing unit to generate a bias signal for application to the modulator, characterised by an electromagnetic radiation detector arranged to measure power of modulated electromagnetic radiation detected by the detector, the power being provided to the processing unit.

Preferably, the power measured is average power.

Preferably, the processing unit comprises a current to voltage converter.

Preferably, the processing unit comprises a comparator arranged to generate the bias signal in response to a difference between a signal corresponding to the power measured and a reference signal.

More preferably, the comparator generates the bias signal by amplifying the difference.

Preferably, a driver circuit is arranged to receive a data signal and the bias signal so as to generate a biased data signal.

Preferably, a driver circuit for generating a data signal is coupled to a bias-T circuit, the bias-T circuit also being coupled to the comparator so as to generate a biased data signal.

According to a second aspect of the present invention, there is provided a control loop apparatus comprising a bias signal generation apparatus for a modulator as set forth above in connection with the first aspect of the present invention.

According to a third aspect of the present invention, there is provided a communication system comprising a bias signal generation apparatus for a modulator as set forth above in connection with the first aspect of the present invention.

According to a fourth aspect of the present invention, there is provided a method of generating a bias signal for a modulator, the method comprising the steps of: generating a bias signal for application to the modulator; characterised by measuring the power of modulated electromagnetic radiation, the bias signal being generated in response to the measured power.

Preferably, wherein the measured power is expressed as an electrical current, the method further comprises the step of converting the electrical current into an electrical voltage.

Preferably, the method further comprises the step of generating the bias signal in response to a difference between a signal corresponding to the power measured and a reference signal. More preferably, the bias signal is generated by amplifying the difference.

According to a fifth aspect of the present invention, there is provided, a method of controlling a modulator comprising the method of generating a bias signal is provided as set forth in connection with the fourth aspect of the present invention.

According to a sixth aspect of the present invention, there is provided a use of measured power to generate a bias signal for a modulator as set forth in connection with the fourth aspect of the present invention.

It is thus possible to provide a control loop apparatus that can maintain a substantially constant extinction ratio for a modulated signal without the need to monitor and change the temperature of the EA modulator. Further, the control loop apparatus also ensures that the average power of the modulated signal is maintained at a predetermined level. The control loop apparatus also provides a more accurate feedback signal, thereby facilitating control of the extinction ratio to a degree of accuracy greater than that provided by known techniques employing temperature monitoring. Consequently, a change in extinction ratio or average power is obviated or at least mitigated. The control loop apparatus is also cheaper to manufacture, more compact and efficient than apparatus presently used.

At least one embodiment of the invention will now be described, by way of example only, with reference to the accompanying drawings in which:
**Figure 1** is a schematic diagram of a control loop apparatus used to compensate temperature changes of an EA modulator; and
**Figure 2** is a schematic diagram of a bias-T circuit for applying a bias voltage to the EA modulator shown in Figure 1.

Throughout the following description identical reference numerals will be used to identify like ports.

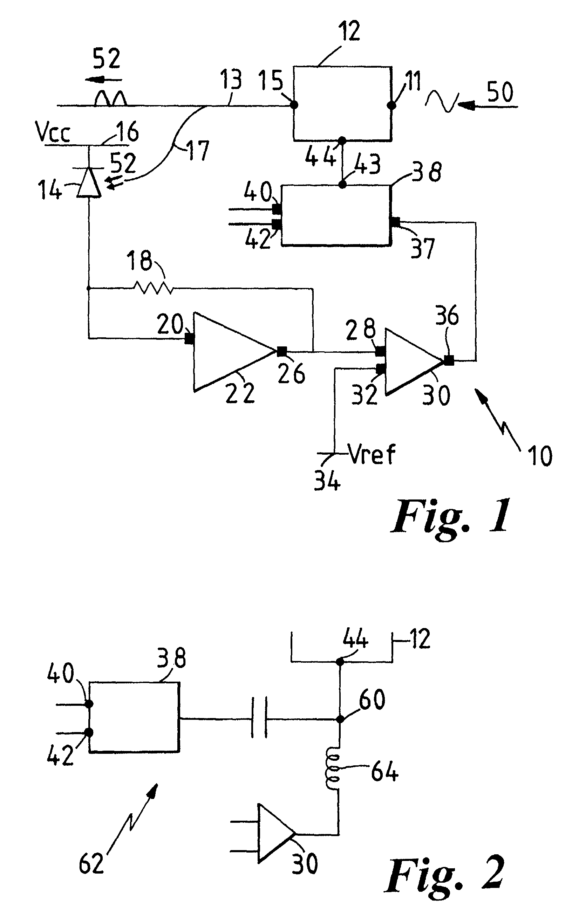

Referring to Figure 1, a control loop apparatus 10 comprises a packaged EA modulator 12, for example, one integrated with an Agere^{TM} distributed feedback (DFB) laser device, (for example, type: E2581) (not shown), the EA modulator 12 having a first input port 11 to receive electromagnetic radiation 50 from the laser device. The EA modulator 12 also comprises a second input port 44 for receiving a bias voltage and an output port 15. A first end of a first output optical fibre 13 is coupled to the output port 15 of the EA modulator 12. A first end of a first branch optical fibre 17 is coupled to the first output optical fibre 13 via, for example, a 90/10 splitter (not shown). The 90/10 splitter can be replaced by another splitter of a different ratio, for example, 99/1. Alternatively, an optical beam splitter can be disposed within the package of the EA modulator 12 to provide the function of the 90/10 splitter.

A second end of the first branch optical fibre 17 is disposed adjacent and directed towards a photodiode 14. A cathode of the photodiode 14 is coupled to a first supply rail 16 held at a first supply voltage of V_{cc} volts. An anode of the photodiode 14 is coupled to a first terminal of a resistor 18 and also coupled to a first, inverting, input terminal 20 of a transimpedance amplifier 22. The transimpedance amplifier 22 has an inverting output terminal 26 coupled to a second terminal of the resistor 18 and also coupled to a first, inverting, input terminal 28 of a high gain operational amplifier 30. A second, non-inverting, input terminal 32 of the operational amplifier 30 is coupled to a reference voltage source 34 to provide a reference voltage of V_{ref} volts. The reference voltage V_{ref} corresponds to the bias voltage being at a level corresponding to a desired level of operation of the EA modulator 12. An output terminal 36 of the operational amplifier 30 is coupled to a first input terminal 37 of a driver circuit 38, for example a DC driver circuit, the driver circuit 38 having a second input terminal 40 and a third input terminal 42. The driver circuit 38 further comprises an output terminal 43 coupled to the second input port 44 of the EA modulator 12. The photodiode 14, the transimpedance amplifying 22 and the operational amplifier, in this example, constitute a processing unit.

In operation, the reference voltage V_{ref} is offset, for example by 0.1 mV to 50mV, from a predetermined reference voltage that would, upon powering-up of the control loop apparatus 10, normally result in the operational amplifier 30 generating a substantially zero value bias voltage. Consequently, the operational amplifier 30 is forced to generate a predetermined non-zero value bias voltage; the predetermined bias voltage is required in order to achieve correct operation of the EA modulator 12 upon powering-up of the control loop apparatus 12.

When the laser device transmits the electromagnetic radiation 50, for example in the form of a continuous wave, to the EA modulator 12, the electromagnetic radiation 50 propagates through the EA modulator 12 via first input port 11.

The electromagnetic radiation 50 is modulated by the EA modulator 12 under the control of the driver circuit 38 operating in a known way so as to cause the EA modulator 12 to produce a modulated signal 52 in response to an electrical input signal applied across the second and third input terminals 40, 42. The modulated signal 52 is presented at the output port 15 of the EA modulator 12 and propagates through the first output optical fibre 13. A portion of the modulated signal 52 is tapped by the 90/10 splitter and propagates through the first branch optical fibre 17 and is incident upon the photodiode 14. When the EA modulator 12 is operating optimally, an extinction ratio of the modulated signal 52 is at a desired level corresponding to the predetermined bias voltage

In response to the average power of the portion of the modulated signal 52 incident upon the photodiode, the photodiode 14 allows a current to flow therethrough corresponding to the average power of the electromagnetic radiation incident upon the photodiode 14. The current flowing through the photodiode 14 is used to monitor the operation of the EA modulator 12. The current flowing through the photodiode 14 is applied to the first input terminal 20 of the transimpedance amplifier 22, resulting in a monitoring signal Vₘₒₙ being generated at the output terminal of the transimpedance amplifier 22. The monitoring signal Vₘₒₙ generated by the transimpedance amplifier 22 is applied to the first input terminal 28 of the operational amplifier 30 and the reference voltage V_{ref} is applied to the second input terminal 32 of the operational amplifier 30. The operational amplifier 30 acts as a comparator between the monitoring signal Vₘₒₙ and the reference voltage V_{ref} for the purpose of generating the non-zero bias voltage. Consequently, if the desired extinction ratio is no longer achieved, biasing of the EA modulator 12 is adjusted by the operational amplifier 30.

When the extinction ratio of the EA modulator 12 is at the desired level, the average power of the modulated signal 52 is at a required power level. Consequently, the monitoring signal Vₘₒₙ generated by the transimpedance amplifier 22 in response to the current flowing through the photodiode 14 remains substantially unchanged. The monitoring signal Vₘₒₙ and the reference voltage V_{ref} therefore maintain a substantially constant difference therebetween, resulting in the bias voltage remaining substantially unchanged, i.e. remaining as the predetermined non-zero bias voltage.

If the extinction ratio of the EA modulator 12 deviates from the desired level due to, for example, a change in temperature of the EA modulator 12, the average power of the modulated signal 52 also deviates from the level corresponding to the extinction ratio being at the desired level. Consequently, the monitoring signal Vₘₒₙ changes and the difference between the reference voltage V_{ref} and the monitoring signal Vₘₒₙ no longer remains constant, resulting in the bias voltage changing so as to compensate for deviation of the extinction ratio from the desired level. The adjustment of the bias voltage results in the biasing of the EA modulator 12 being adjusted, thereby reinstating the average power to the required power level and the extinction ratio to the desired level. Consequently, the biasing of the EA modulator 12 is actively adjusted when required so as to keep the EA modulator 12 modulating effectively so as to maintain the extinction ratio of the modulated signal 52 at the desired level.

Referring to Figure 2, although, in the above example, the bias voltage is applied to the EA modulator 12 via the driver circuit 38, the bias voltage can be applied via a node 60 of a bias-T circuit 62 coupled to the EA modulator 12, the operational amplifier 30 and the driver circuit 38. The bias-T circuit 62, in the example shown in Figure 2, comprises an inductor 64. However, the inductor 64 can be replaced by a resistor, if required.

## Claims

1. A bias signal generation apparatus for a modulator (12) comprising:
a processing unit to generate a bias signal for application to the modulator (12), **characterised by**:
an electromagnetic radiation detector (14) arranged to measure power of modulated electromagnetic radiation (52) detected by the detector (14), the power being provided to the processing unit.

2. An apparatus as claimed in Claim 1, wherein the power measured is average power.

3. An apparatus as claimed in Claim 1, wherein the processing unit comprises a current to voltage converter (22).

4. An apparatus as claimed in any one of Claims 1 to 3, wherein the processing unit further comprises a comparator (30) arranged to generate the bias signal in response to a difference between a signal corresponding to the power measured and a reference signal.

5. An apparatus as claimed in Claim 4, wherein the comparator (30) generates the bias signal by amplifying the difference.

6. An apparatus as claimed in any one of the preceding claims, further comprising a driver circuit (38) arranged to receive a data signal and the bias signal so as to generate a biased data signal.

7. An apparatus as claimed in any one of Claims 1 to 5, further comprising a driver circuit (38) for generating a data signal coupled to a bias-T circuit (62), the bias-T circuit (62) also being coupled to the comparator (30) so as to generate a biased data signal.

8. A control loop apparatus (10) comprising a bias signal generation apparatus for a modulator (12) as claimed in any one of the preceding claims.

9. A method of generating a bias signal for a modulator (12), the method comprising the steps of:
generating a bias signal for application to the modulator (12);
**characterised by**:
measuring the power of modulated electromagnetic radiation (52), the bias signal being generated in response to the measured power.

10. A method as claimed in Claim 9, wherein the measured power is expressed as an electrical current, the method further comprising the step of:
converting the electrical current into an electrical voltage.

11. A method as claimed in Claim 9 or Claim 10, further comprising the step of:
generating the bias signal in response to a difference between a signal corresponding to the power measured and a reference signal.

12. A method as claimed in Claim 11, wherein the bias signal is generated by amplifying the difference.

13. A method of controlling a modulator (12) comprising the method of generating a bias signal as claimed in any one of Claims 9 to 12.
